# EUROPEAN PATENT APPLICATION

(11) **EP 4 277 387 A1**
(43) Date of publication of application: **15.11.2023**
(21) Application number: 21916778.0
(22) Date of filing: 07.01.2021
(51) Int. Cl.: H04W 72/04

(54) **BEAM INDICATION METHOD AND APPARATUS, AND COMMUNICATION DEVICE**

(71) Applicant: Beijing Xiaomi Mobile Software Co., Ltd., Beijing 100085 (CN)
(72) Inventor: LI, Mingju, Beijing 100085 (CN)
(74) Representative: dompatent von Kreisler Selting Werner - Partnerschaft von Patent- und Rechtsanwälten mbB
(86) International application number: PCT/CN2021/070676
(87) International publication number: WO 2022/147720

(57) **Abstract**

Provided are a beam indication method and apparatus, and a communication device, which is belong to the technical field of wireless communications. The method comprises: receiving beam indication information of a control resource set (CORESET) group, wherein there are one or more CORESETs in the CORESET group, and the beam indication information is used for indicating a TCI state of a beam corresponding to each CORESET in the CORESET group; and receiving control information according to the beam indication information. In the present disclosure, on the basis of a TCI state, which is indicated by received beam indication information, of a beam responding to each CORESET, a receiving beam used by a terminal when same receives a PDCCH and transmits signaling by using each CORESET is determined, such that the indication of the receiving beam in the terminal is realized.

## Description

### TECHNICAL FIELD

The present disclosure relates to a field of wireless communication technology, and particularly to a beam indication method and apparatus, and a communication device.

### BACKGROUND

In new radio (NR) technology, especially when the communication frequency band is within the frequency range (FR) 2, due to faster attenuation of high frequency channels, beam-based transmission and reception are required to ensure coverage.

When a network device, for example, a base station has multiple transmission and reception points (TRPs), the base station may use the multiple TRPs to provide service for a terminal, including using the multiple TRPs to send a physical downlink control channel (PDCCH) to the terminal. When the base station uses the multiple TRPs to send the PDCCH to the terminal, different TRPs use different beams to transmit. In order to implement PDCCH transmission by the multiple TRPs (i.e., PDCCH transmission of Multi-TRP), in a case where a control resource set (CORESET) or two CORESETs are used, how to configure a receiving beam of the CORESET for PDCCH transmission of Multi-TRP is a problem that needs to be solved.

### SUMMARY

The present disclosure provides a beam indication method and apparatus, and a communication device, for solving the technical problem of how a terminal determines a receiving beam used when receiving signaling transmitted by the PDCCH of Multi-TRP via each CORESET.

A beam indication method is provided in a first aspect of the embodiment of the present disclosure. The method is applied to a terminal, and includes:
receiving beam indication information of a control resource set (CORESET) group, in which a number of CORESETs in the CORESET group is one or more, and the beam indication information is configured to indicate one or more transmission configuration indicator (TCI) states of one or more beams corresponding respectively to the one or more CORESETs in the CORESET group; and
receiving control information based on the beam indication information.

Another beam indication method is provided in a second aspect of the embodiment of the present disclosure. The method is applied to a network device, and includes:
sending beam indication information of a CORESET group to a terminal; in which a number of CORESETs in the CORESET group is one or more, the beam indication information is configured to indicate one or more TCI states of one or more beams corresponding respectively to the one or more CORESETs in the CORESET group; and
sending control information to the terminal based on the one or more TCI states of the one or more beams corresponding respectively to the one or more CORESETs in the CORESET group.

A beam indication apparatus is provided in a third aspect of the present disclosure. The apparatus is applied to a terminal, and includes:
a first receiving module, configured to receive beam indication information of a CORESET group; in which a number of CORESETs in the CORESET group is one or more, and the beam indication information is configured to indicate one or more TCI states of one or more beams corresponding respectively to the one or more CORESETs in the CORESET group; and
a second receiving module, configured to receive control information based on the the beam indication information.

Another beam indication apparatus is provided in a fourth aspect of the present disclosure. The apparatus is applied to a network device, and includes:
a first sending module, configured to send beam indication information of a CORESET group to a terminal; in which a number of CORESETs in the CORESET group is one or more, and the beam indication information is configured to indicate one or more TCI states of one or more beams corresponding respectively to the one or more CORESETs in the CORESET group; and
a second sending module, configured to send control information to the terminal based on the one or more TCI states of the one or more beams corresponding respectively to the one or more CORESETs in the CORESET group.

A communication device is provided in a fifth aspect of the present disclosure, including: a transceiver; a memory; and a processor, in which the processor respectively connects to the transceiver and the memory, and is configured to control the transceiver to receive and send wireless signals by executing computer-executable instructions on the memory, and to implement the beam indication method according to any one of the first aspect or second aspect.

A computer storage medium is provided in a sixth aspect of the present disclosure, in which the computer storage medium stores computer-executable instructions, after the computer-executable instructions are executed by the processor, the beam indication method according to any one of the first aspect or second aspect can be implemented.

A computer program product is provided in a seventh aspect of the present disclosure, including a computer program, in which when the computer program is executed by a processor, the beam indication method described in the first aspect or second aspect can be implemented.

The technical solutions provided in the embodiments of the present disclosure may include the following beneficial effects.

The beam indication information of the CORESET group is received. The number of CORESETs in the CORESET group is one or more, and the beam indication information is configured to indicate one or more TCI states of one or more beams corresponding respectively to the one or more CORESETs in the CORESET group. The control information is received based on the beam indication information. In the present disclosure, a receiving beam used by the terminal when receiving signaling transmitted by PDCCH via each CORESET is determined based on the one or more TCI states of the one or more beams corresponding respectively to the one or more CORESETs indicated by the received beam indication information.

Additional aspects and advantages of the present disclosure will be set forth in part in the following description, and in part will become obvious from the following description, or may be learned by practice of the disclosure.

### BRIEF DESCRIPTION OF THE DRAWINGS

The above and/or additional aspects and advantages of the present disclosure will become apparent and more readily appreciated from the following descriptions made with reference to the accompanying drawings, in which:
FIG. 1 is a flow diagram of a beam indication method provided in an embodiment of the present disclosure;
FIG. 2 is a flow diagram of a beam indication method provided in another embodiment of the present disclosure;
FIG. 3 is a flow diagram of a beam indication method provided in another embodiment of the present disclosure;
FIG. 4 is a block diagram of a beam indication apparatus provided in an embodiment of the present disclosure;
FIG. 5 is a block diagram of a beam indication apparatus provided in another embodiment of the present disclosure;
FIG. 6 is a block diagram of a terminal provided in an embodiment of the present disclosure; and
FIG. 7 is a block diagram of a network device provided in an embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

The terms used in the disclosure are only for the purpose of describing specific embodiments, and are not intended to limit the embodiments of the disclosure. The singular forms of "a" and "the" used in the disclosure and appended claims are also intended to include plural forms, unless the context clearly indicates other meanings. It should also be understood that the term "and/or" as used herein refers to and includes any or all possible combinations of one or more associated listed items.

It should be understood that although the terms "first", "second", and "third" may be used in the embodiments of the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein can be interpreted as "when", "while" or "in response to determining".

The embodiments of the disclosure are described in detail below, and examples of the embodiments are illustrated in the accompanying drawings, in which the same or similar numbers indicate the same or similar elements. The embodiments described below with reference to the accompanying drawings are exemplary and are intended to be used to explain the disclosure and are not to be construed as limiting the disclosure.

The beam indication method and apparatus, and the communication device provided in the present disclosure are described in detail below with reference to the accompanying drawings.

### Explanation of terms:

Transmission and reception point (TRP): a serving cell or a neighboring cell corresponding to a terminal.

Control resource set (CORESET): configuration resources configured for a downlink control channel (PDCCH) to send downlink control information (DCI) signaling.

CORESET pool index: a CORESET pool index value corresponds to one or more CORESETs, and each CORESET pool index corresponds to one TRP. That is, the CORESETs corresponding to different CORESET pool index values are configured for PDCCHs of different TRPs.

In embodiments of the present disclosure, a network device has multiple corresponding TRPs. The network device may use the multiple TRPs to provide service for a terminal, including using the multiple TRPs to send the PDCCH to the terminal. When multiple TRPs are used, that is, the PDCCH transmission is performed by the multiple TRPs (Multi-TRP for short), the PDCCH transmission of Multi-TRP has one or more corresponding CORESETs, and numbers of transmission configuration indications (TCI) states of the receiving beams corresponding to respective CORESETs are different, which may be one or more. The TCI state is configured to indicate a reference signal resource identifier corresponding to a beam. Therefore, when receiving signaling transmitted based on the CORESET group, the terminal needs to determine the corresponding receiving beam. Therefore, a beam indication method is provided in the present embodiment, which realizes beam indication based on the received beam indication information of the CORESET group. The beam indication information is configured to indicate TCI states of beams corresponding to CORESETs in the CORESET group. The TCI state indicates a receiving beam used by the terminal when receiving signaling transmitted by the PDCCH via each CORESET.

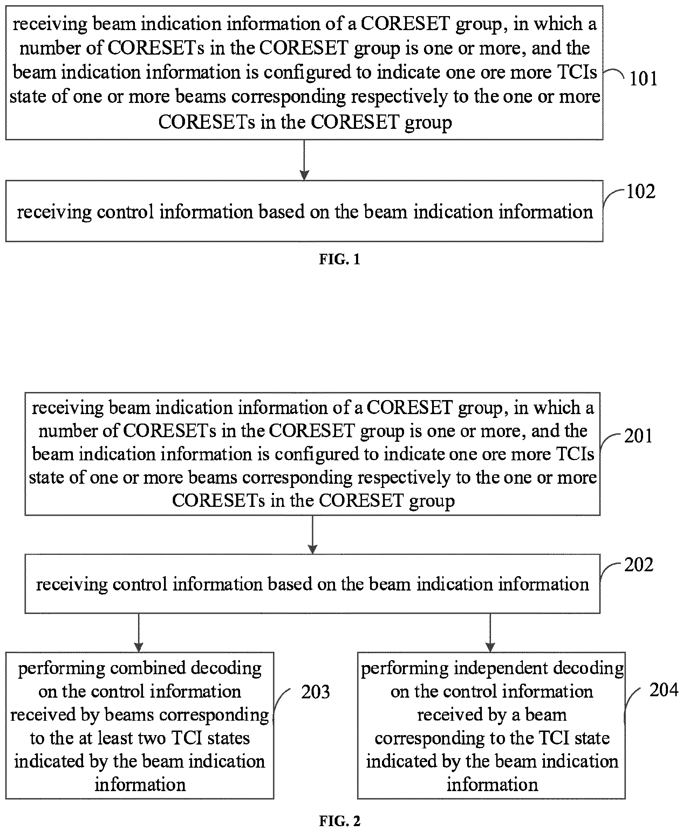

FIG. 1 is a flow diagram of a beam indication method provided in an embodiment of the present disclosure, the method is applied to a terminal.

As illustrated in FIG. 1, the method includes the following steps.

At step 101, beam indication information of a CORESET group is received. A number of CORESETs in the CORESET group is one or more, and the beam indication information is configured to indicate one or more TCI states of one or more beams corresponding to the one or more CORESETs in the CORESET group.

The beam indication method in the embodiment of the present disclosure may be applied to any terminal. The terminal may be distributed throughout a mobile communication system, and each terminal may be stationary or mobile. The terminal may also be referred to by those skilled in the art as mobile station, subscriber station, mobile unit, user unit, wireless unit, remote unit, mobile device, terminal, wireless device, wireless communication device, remote device, mobile subscriber station, access user device, mobile user device, wireless user device, remote user device, handheld device, user agent, mobile client, client, vehicle-mounted device, wearable device, or some other suitable terms. The terminal may be a cellular phone, a personal digital assistant (PDA), a wireless modem, a wireless communication device, a handheld device, a tablet computer, a laptop computer, a cordless telephone, a wireless local loop (WLL) station, etc., and can communicate with a network device in the mobile communication system.

The network device is deployed in a wireless access network to provide a wireless access function for the terminal. The network device may be a base station (BS). The network device may wirelessly communicate with the terminal via one or more antennas. The network device may provide communication coverage for a geographic area where it is located. The base station may include different types, such as a macro base station, a micro base station, a relay station, or an access point, etc. In some embodiments, the base station may be referred to by those skilled in the art as base station transceiver, wireless base station, access point, wireless transceiver, basic service set (BSS), extended service set (ESS), NodeB, evolved NodeB (eNB or eNodeB), or some other suitable terms. Exemplarily, in a 5G system, the base station is referred to as gNB. For ease of description, in the embodiments of the present disclosure, the apparatus for providing a wireless communication function for the terminal is collectively referred to as the network device.

At step 102, control information is received based on the beam indication information.

In the embodiment, the CORESET group is a CORESET group for PDCCH transmission of Multi-TRP. The number of the CORESETs included in the CORESET group may be one or more. The terminal receives the beam indication information of the CORESET group. The one or more TCI states of the one or more beams corresponding to the one or more CORESETs are indicated by the beam indication information, in which the TCI state indicates the corresponding receiving beam when the terminal receives signaling transmitted by the PDCCH via each CORESET, which achieves beam indication. Then the terminal receives the control information by using the receiving beam. The control information may be DCI signaling sent by the PDCCH via each CORESET in the CORESET group, which improves the success rate of receiving the control information.

In the embodiment of the present disclosure, the number of CORESETs included in the CORESET group may be one or more. When multiple CORESETs are included in the CORESET group, the numbers of TCI states corresponding to different CORESETs are also different. In the following, the implementation examples are used to explain the CORESET groups in different scenarios and the TCI states corresponding to the CORESETs.

### Embodiment 1:

In one implementation of the embodiments of the present disclosure, the CORESET group includes one first CORESET. A maximum number of first TCI states corresponding to the first CORESET is greater than or equal to two.

In the embodiment, the CORESET group includes one first CORESET, so that the beam indication information received by the terminal is the beam indication information of the first CORESET. Thus, the beam indication information indicates the first TCI state of the beam corresponding to the first CORESET. The maximum number of the first TCI states of the beam corresponding to the first CORESET is greater than or equal to two. That is, the receiving beam determined by the terminal may include one or more beams indicated by the one or more first TCI states of the one or more beams corresponding to the first CORESET. The terminal receives the control information by using the one or more receiving beams indicated by the one or more first TCI states, so that the receiving beam of the terminal is determined, which improves success rate of receiving the control information.

As one implementation, each first TCI state corresponds to a different CORESET pool index, or each first TCI state corresponds to a different TRP. The CORESET pool index corresponds to one TRP, that is, different CORESET pool indexes correspond to different TRPs, so that each first TCI state corresponding to one CORESET may correspond to a different TRP. That is, different receiving beams determined by the terminal based on the first TCI states corresponding to one CORESET may correspond to different TRPs, which achieves configuring different receiving beams to receive control information sent by different TRPs.

It should be noted that the terms "first CORESET" and "first TCI state" are used for the purpose of distinguishing them from CORESETs and TCIs in other embodiments, without defining the priority.

In the embodiment of the present disclosure, the beam indication information of the first CORESET may be a media access control control element (MAC CE), or DCI. Different implementations are described respectively in the following.

As one implementation, the beam indication information is a MAC CE.

A first MAC CE includes a first CORESET identification (ID) of the first CORESET and/or a CORESET group ID of the CORESET group, for example, the first CORESET ID is CORESET#1, or CORESET#2, or CORESET#3. For example, the CORESET group ID is CORESET group #1 or CORESET group #2, which is not limited in the embodiment. The first MAC CE further includes a first indication field and/or an associated second indication field, which will be specifically described below.

As one implementation, the first MAC CE only includes the first indication field. That is, the first indication field always presents in the first MAC CE, and the second indication field associated with the first indication field is not required to indicate whether the first indication field presents in the first MAC CE.

As a second implementation, the first MAC CE only includes the second indication field. In this case, the value of the second indication field is configured to indicate that the first indication field does not present in the first MAC CE. For example, the value of the second indication field is 0, indicating that the first indication field does not present in the first MAC CE.

As a third implementation, the first MAC CE includes the first indication field and the associated second indication field. Whether the first indication field presents in the first MAC CE or not is indicated by the second indication field.

In one implementation of the embodiment, the first indication field is configured to indicate a first TCI state, or the first indication field is configured to indicate a first TCI state and a CORESET pool index or a TRP corresponding to the first TCI state. The second indication field is configured to indicate whether the associated first indication field presents in the first MAC CE.

One example of the first MAC CE is shown in Table 1, taking that the number of TCI states corresponding to the first CORESET is 2 as an example to explain. As shown in Table 1, the second indication field includes C₀, C₁, and the first indication field includes TCI₀ and TCI₁. C₀ indicates whether the TCI₀ field presents in the first MAC CE. As an implementation, if the value of C₀ is 1, it indicates that the TCI₀ field presents, and if the value of C₀ is 0, it indicates that the TCI₀ field does not present. Similarly, C₁ indicates whether the TCI₁ field presents. If there is no C₀, that is to say, the second indication field is not required to indicate whether the TCI₀ field presents in the first MAC CE. That is, it is determined that the TCI₀ field surely presents in the first MAC CE. Similarly, if there is no C₁, that is to say, the second indication field is not required to indicate whether corresponding TCI1 field presents in the first MAC CE. That is, it is determined that the TCI₁ field surely presents in the first MAC CE.

**Table 1**

| | |
|---|---|
| 1. Serving cell ID | |
| 2. BWP ID | |
| 3. CORESET ID and/or CORESET group ID | |
| 4. C₀ | TCI₀ |
| 5. C₁ | TCI₁ |

In the embodiment, TCI₀ may correspond to a TCI state of a first TRP, and TCI₁ corresponds to a TCI state of a second TRP. Since the CORESET pool index and the TRP have a one-to-one correspondence, which achieves indicating the first TCI state, and indicating the CORESET pool index or the TRP corresponding to the first TCI state at the same time. That is, in a scenario with more than one TRP, beams corresponding to the terminal may be configured to receive control information of the PDCCH sent by different TRPs to the terminal.

As a second implementation, the beam indication information is first DCI.

In one example of the embodiment, the first DCI includes one first code point, and the first TCI state corresponding to the first code point is indicated by a second MAC CE. The first DCI includes one bit, and the first DCI corresponds to two first code points, respectively "0" or "1". Each first code point corresponds to one or two first TCI states. The one or two first TCI states corresponding to the first code point are determined based on one or two first TCI states corresponding to the first code point indicated by the second MAC CE.

As an implementation of the embodiments of the present disclosure, the second MAC CE includes the first CORESET ID and/or the CORSET group ID, and further includes one or more indication fields corresponding to the one or more first code points. An indication field corresponding to a first code point includes a third indication field and/or an associated fourth indication field, which will be described below in detail.

As one implementation, the second MAC CE only includes the third indication field, that is, the third indication field always presents in the second MAC CE, and the fourth indication field associated with the third indication field is not required to indicate whether the third indication field presents in the second MAC CE.

As a second implementation, the second MAC CE only includes the fourth indication field. In this case, the value of the fourth indication field is configured to indicate that the third indication field does not present in the second MAC CE. For example, the value of the fourth indication field is 0, indicating that the third indication field does not present in the second MAC CE.

As a third implementation, the second MAC CE includes the third indication field and the associated fourth indication field. Whether the third indication field presents in the second MAC CE or not is indicated by the fourth indication field.

In one implementation of the embodiment, the third indication field is configured to indicate a first TCI state, or the third indication field is configured to indicate a first TCI state and a CORESET pool index or a TRP corresponding to the first TCI state. The fourth indication field is configured to indicate whether the associated third indication field presents in the second MAC CE.

The first DCI includes more than one bit, so that the first code point corresponding to the first DCI may be more than one. For example, the first DCI includes 3 bits, and may correspond to 8 code points, which are 000, 001, 010, 011, 100, 101, 110, and 111, respectively. In the embodiment, each code point has a corresponding indication field. In the embodiment, take each code point including two indication fields, i.e., the third indication field and the associated fourth indication field as an example.

As shown in Table 2, an example of the second MAC CE is shown in Table 2. The MAC CE indicates a CORESET ID of one CORESET and/or a CORESET group ID. Take the DCI including 3 bits, which may indicate 8 code points as an example. The first first code point is 000, the corresponding fourth indication field includes (C0,0) field and (C0,1) field, and the third indication field includes (TCI_{0,0}) field and (TCI_{0,1}) field. Similarly, the second first code point is 001, the corresponding fourth indication field includes (C1,0) field and (C1,1) field, the third indication field includes TCI_{1,0} field and TCI_{1,1} field, and the principle is the same for other first code points, which is not listed in the embodiment.

**Table 2**

| | |
|---|---|
| 1. Serving cell ID | |
| 2. BWP ID | |
| 3. CORESET ID and/or CORESET group ID | |
| 4. (C_{0,0}) | (TCI_{0,0}) |
| 5. (C_{0,1}) | (TCI_{0,1}) |
| 6. (C_{1,0}) | (TCI_{1,0}) |
| 7. (C_{1,1}) | (TCI_{1,1}) |
| ...... | ...... |
| 18. (C_{7,0}) | (TCI_{7,0}) |
| 19. (C_{7,1}) | (TCI_{7,1}) |

The (C_{0,0}) field in the fourth indication field indicates whether the (TCI_{0,0}) field in the third indication field presents in the second MAC CE. For example, if the value of the (C_{0,0}) field is 1, it indicates that the (TCI_{0,0}) field presents, so the value of the (TCI_{0,0}) field indicates a first TCI state. In the fourth indication field, the (C_{0,1}) field indicates whether the (TCI_{0,1}) field in the third indication field presents. For example, if the value of the (Co,i) field is 1, it indicates that the (TCI_{0,1}) field presents, so the value of the (TCI_{0,1}) field indicates a first TCI state. If the value of the (C_{0,1}) field is 0, it indicates that the (TCI_{0,1}) does not present. If there is no (C_{0,0}) field, that is, the fourth indication field is not required to indicate whether the (TCI_{0,1}) field presents in the second MAC CE. That is, it is determined that the (TCI_{0,1}) field surely presents in the second MAC CE. If the (C_{0,1}) field does not present, that is to say, the fourth indication field is not needed to indicate whether the corresponding (TCI_{0,1}) field presents in the second MAC CE. That is, it is determined that the (TCI_{0,1}) field surely presents in the second MAC CE.

In the embodiment, for example, the first code point is 000, and the fourth indication field corresponding to the first code point includes (C_{0,0}) field and (C_{0,1}) field. The first code point is 111, the fourth indication field corresponding to the first code point includes (C_{7,0}) field and (C_{7,1}) field, which are not listed in the embodiment. When the first code point is 000, two corresponding first TCI states are indicated by the value of the (TCI_{0,0}) field and the value of the (TCI_{0,1}) field in the third indication field, respectively. When the first code point is 111, two corresponding first TCI states are indicated by the value of the (TCI_{7,0}) field and the value of the (TCI_{7,1}) field in the third indication field, respectively.

It should be noted that the maximum number of the first TCI states corresponding to each code point in the embodiment is the maximum number of the first TCI states corresponding to the first CORESET.

### Embodiment 2:

In one implementation of the embodiment of the present disclosure, the CORESET group includes one or more second CORESETs.

For each second CORESET, a maximum number of second TCI states corresponding to the second CORESET is one, that is, the second CORESET may correspond to zero or one second TCI state.

It should be noted that in the embodiment, in order to facilitate distinguishing, the CORESET included in the CORESET group is called the second CORESET, and the TCI state corresponding to the second CORESET is called the second TCI state.

In the embodiment, the CORESET group includes one or more second CORESETs. The maximum number of the second TCI states corresponding to the second CORESET is one. As one implementation, the beam indication information received by the terminal indicates the second TCI state of a beam corresponding to one second CORESET. When there is one second TCI state, the beam indicated by the second TCI state is used as the receiving beam for the terminal to receive the control information, which realizes indication of the receiving beam of the terminal and improves the success rate of receiving the control information. As another implementation, the beam indication information received by the terminal indicates the second TCI states of the beams corresponding to more than one second CORESET, so that the terminal determines more than one receiving beam used by the terminal to receive the control information based on the second TCI states corresponding to more than one second CORESET. The more than one receiving beam corresponds to the more than one second TCI state. That is, each second TCI state corresponds to one receiving beam, which realizes the indication of the receiving beam of the terminal and improves the success rate of receiving the control information.

In the embodiment of the present disclosure, the beam indication information of the second CORESET may be a MAC CE or DCI. The following describes different implementations respectively.

As an implementation, the beam indication information is a third MAC CE.

Since the CORESET group includes one or more second CORESETs, the third MAC CE includes a second CORESET ID of at least one second CORESET and/or the CORESET group ID. That is, the second CORESET included in the CORESET group has the corresponding second CORESET ID and/or CORESET group ID in the third MAC CE, which realizes indication of the corresponding second CORESET in the third MAC CE.

As one implementation, the third MAC CE also includes one or more fifth indication fields and/or sixth indication fields corresponding to the one or more second CORESETs, which will be described below in detail.

As one implementation, the third MAC CE only includes the first indication field. That is, the fifth indication field always presents in the third MAC CE, and the sixth indication field associated with the fifth indication field is not required to indicate whether the fifth indication field presents in the third MAC CE.

As a second implementation, the third MAC CE only includes the sixth indication field. In this case, the value of the second indication field is used to indicate that the fifth indication field does not present in the third MAC CE. For example, the value of the sixth indication field is 0, indicating that the fifth indication field does not present in the third MAC CE.

As a third implementation, the third MAC CE includes the fifth indication field and the associated sixth indication field. The sixth indication field indicates that the fifth indication field presents in the third MAC CE or does not present in the third MAC CE.

In one implementation of the embodiment, the fifth indication field is configured to indicate a second TCI state. The sixth indication field is configured to indicate whether the associated fifth indication field presents in the third MAC CE.

As shown in Table 3, an example of the third MAC CE is shown in Table 3. Take the CORESET group including two second CORESETs as an example for description. Table 3 shows the fifth indication field and the sixth indication field for the second CORESET ID including CORESET ID#0 and CORESET#1. The sixth indication field includes C₀' and C₁', and the fifth indication field includes TCI₀' and TCI₁'. The C₀' field is configured to indicate whether the TCI₀' field presents in the third MAC CE. For example, if the value of the C₀' field is 1, it indicates that the TCI₀' field presents. If the value of the C₀' field is 0, it indicates that the TCI₀' field does not present. Similarly, the C₁' field is configured to indicate whether the TCI₁ field presents in the third MAC CE. If there is no C₀', that is to say, the sixth indication field is not needed to indicate whether the TCI₀' field presents in the third MAC CE. That is, it is determined that the TCI₀' field surely presents in the third MAC CE. If there is no C₁', that is to say, the sixth indication field is not required to indicate whether the corresponding TCI₁' field presents in the third MAC CE. That is, it is determined that the TCI₁' field surely presents in the third MAC CE.

**Table 3**

| | |
|---|---|
| 1. Serving cell ID | |
| 2. BWP ID | |
| 3. CORESET ID#0 | |
| 4. CORESET ID#1 | |
| 5. C₀' | TCI₀^{'} |
| 6. C₁' | TCI₁^{'} |

The ID of the serving cell may include at least one of the serving cell ID, TRP ID, and CORESETPoolIndex. CORESET ID#0 and CORESET ID#1 may be replaced with the CORESET group ID, or replaced with CORESET ID#0, CORESET ID#1 and the CORESET group ID.

In one implementation of the embodiment of the present disclosure, the third MAC CE includes one second CORESET ID, such as CORESET ID#0. The third MAC CE is also applicable to another CORESET ID (such as CORESET ID#1) associated with the CORESET ID#0. The association relationship is given in other RRC signaling or MAC CE signaling. Similarly, CORESET ID#0 corresponds to a first TRP, and its TCI state is indicated by TCI₀'. CORESET ID#1 corresponds to a second TRP, and its TCI state is indicated by TCI₁'.

In another implementation of the embodiment of the present disclosure, the third MAC CE includes more than one second CORESET ID. For example, it includes two second CORESET IDs, namely CORESET ID#0 and CORESET ID#1. CORESET ID#0 corresponds to the first TRP, and its second TCI state is indicated by TCI₀'. CORESET ID#1 corresponds to the second TRP, and its second TCI state is indicated by TCI₁'.

It should be noted that for the case that the third MAC CE includes other numbers of second CORESET IDs, the principle is the same, and the embodiment will not be repeated.

As a second implementation, the beam indication information is second DCI.

In one example of the embodiment, the second DCI includes two second code points. For each second code point, a second TCI state corresponding to the second code point is indicated by a fourth MAC CE. The second DCI includes one bit, which corresponds to two second code points "0" and "1". Each second code point corresponds to one or two second TCI states. The second code point corresponds to one or two second TCI states, which are determined based on one or two second TCI states corresponding to the second code point indicated by the fourth MAC CE.

As one implementation of the embodiment, the fourth MAC CE includes a second CORESET ID of at least one second CORESET and/or the CORESET group ID, and also includes one or more indication fields corresponding to one or more second code points of each second CORESET. For each second code point, an indication field corresponding to the second code point includes a seventh indication field and an eighth indication field, which will be described below in detail.

As one implementation, the fourth MAC CE only includes the seventh indication field. That is, the seventh indication field always presents in the fourth MAC CE, and there is no need to use the eighth indication field associated with the seventh indication field to indicate whether the seventh indication field presents in the fourth MAC CE.

As a second implementation, the fourth MAC CE only includes the sixth indication field. In this case, the value of the eighth indication field is configured to indicate that the seventh indication field does not present in the fourth MAC CE. For example, the value of the eighth indication field is 0, indicating that the seventh indication field does not present in the fourth MAC CE.

As a third implementation, the fourth MAC CE includes the seventh indication field and the associated eighth indication field. The eighth indication field indicates that the seventh indication field presents in the third MAC CE or does not present in the fourth MAC CE.

In an implementation of the disclosure, the number of the seventh indication fields is one or more. Each seventh indication field is configured to indicate a second TCI state; or, each seventh indication field is configured to indicate a second TCI state, and a CORESET pool index or a TRP corresponding to the second TCI state. The eighth indication field is configured to indicate whether at least one corresponding seventh indication field presents in the fourth MAC CE. The number of the seventh indication fields is the same as the number of the second CORESETs in the CORESET group.

The second DCI includes more than one bit, so the second DCI may correspond to more than one second code point. For example, the second DCI includes 3 bits, and may correspond to 8 code points, which are 000, 001, 010, 011, 100, 101, 110, and 111, respectively. In the embodiment, each second code point includes two indication fields, that is, the seventh indication field and the eighth indication field.

As shown in Table 4, Table 4 shows an example of the fourth MAC CE. There are two seventh indication fields, and the seventh indication fields correspond to (TCI_{i,0}') field and (TCI_{i, 1}') field respectively, which indicating the TCI states corresponding to the two CORESETs respectively, that is, the TCI states corresponding to CORESET ID#0 and CORESET ID#1. The value of i is 0-7. Take the DCI including 3 bits which may indicate 8 code points as an example. The second code point is 000, and the corresponding eighth indication fields include (C_{0, 0}') field and (C_{0, 1}') field, and the seventh indication fields correspond to (TCI₀, ₀') field and (TCI_{0, 1}') field, respectively. Similarly, the second code point is 111, the corresponding eighth indication fields include (C_{1,0}') field and (C_{1,1}') field, and the seventh indication fields include (TCI_{1,0}') field and (TCI_{1,1}') field, respectively. For other second code points, the principle is the same, which will be not listed in the embodiment.

**Table 4**

| | |
|---|---|
| 1. Serving cell ID | |
| 2. BWP ID | |
| 3. CORESET ID#0 | |
| 4. CORESET ID#1 | |
| 5. (C_{0,0}') | (TCI_{0,0}') |
| 6. (C_{0,1}') | (TCI_{0,1}') |
| 7. (C_{1,0}') | (TCI_{1,0}') |
| 8. (C_{1,1}') | (TCI_{1,1}') |
| ...... | ...... |
| 19. (C_{7,0}') | (TCI_{7,0}') |
| 20. (C_{7,1}') | (TCI_{7,1}') |

The (C_{0,0}') field in the eighth indication fields indicates whether the (TCI_{0,0}') field in the seventh indication fields presents in the fourth MAC CE. For example, the value of the (C_{0,0}') field is 1, indicating that the (TCI_{0,0}') field presents, so that the value of the (TCI_{0,0}') field indicates the second TCI state corresponding to the CORESET ID#0. If the value of the (C_{0,0}') field is 0, the (TCI_{0,0}') field does not present, that is, not indicating the second TCI state corresponding to the CORESET ID#0. The (C_{0,1}') field in the eighth indication fields indicates whether the (TCI_{0,1}') field in the seventh indication fields presents. For example, the value of the (C_{0,1}') field is 1, indicating that the (TCI_{0,1}') presents, so that the value of the (TCI_{0,1}') field indicates the second TCI state corresponding to the CORESET ID#1. If there is no (C_{0,0}') field, that is, the eighth indication field for indicating whether the (TCI_{0,1}') field presents in the fourth MAC CE is not required, that is, it is determined that the (TCI_{0,1}') field surely presents in the fourth MAC CE. If the (C_{0,1}') field does not present, that is to say, the eighth indication field for indicating whether the corresponding (TCI_{0,1}') field presents in the fourth MAC CE is not required. That is, it is determined that the (TCI_{0,1}') field surely presents in the fourth MAC CE.

In the embodiment, for example, the second code point is 000, and the eighth indication fields corresponding to the second code point include (C_{0,0}') and (C_{0,1}'). The second code point is 111, the eighth indication fields corresponding to the second code point include (C_{7,0}') and (C_{7,1}'), which are not listed in the embodiment. When the second code point is 000, the corresponding second TCI states are indicated by the value of the (TCI_{0,0}') field and the value of the (TCI_{0,1}') field in the seventh indication fields, respectively. When the second code point is 111, the corresponding second TCI states are indicated by the value of the (TCI_{7,0}') field and the value of the (TCI_{7,1}') field in the seventh indication fields, respectively.

In the beam indication method of the embodiment of the present disclosure, requirements of different scenarios are met based on the TCI states of the beams corresponding to respective CORESETs indicated by the beam indication information carried in different signaling. The receiving beam via which the terminal receives signaling transmitted by the PDCCH via each CORESET is determined, which achieves the beam indication, then the control information is received using the receiving beam. The control information may be DCI signaling sent by the PDCCH via each CORESET in the CORESET group, which improves the success rate of receiving the control information.

FIG. 2 is a flow diagram of a beam indication method provided in another embodiment of the present disclosure, which shows how to decode the received control information. As shown in FIG. 2, the method includes the following steps.

At step 201, beam indication information of a CORESET group is received. The number of CORESETs in the CORESET group is one or more, and the beam indication information is configured to indicate one or more TCI states of one or more beams corresponding to the one or more CORESETs in the CORESET group.

At step 202, control information is received based on the beam indication information.

In the embodiment, the descriptions of steps 201 to 202 may refer to the explanation of any of the above embodiments. The principle is the same and will not be repeated here.

In the embodiment, after obtaining the beam indication information, the terminal determines an adopted decoding mode based on the number of the TCI states indicated in the beam indication information. If at least two TCI states are indicated by the beam indication information, step 203 is performed. If one TCI state is indicated by the beam indication information, step 204 is performed.

At step 203, combined decoding is performed on the control information received by beams corresponding to the at least two TCI states indicated by the beam indication information.

In the embodiment, when the at least two TCI states are indicated by the beam indication information, the combined decoding is performed on the control information received by the beams corresponding to the at least two TCI states indicated by the beam indication information, without performing independent decoding on the control information received by the beam corresponding to each TCI state. In the present disclosure, by using the combined decoding, decoding error is reduced, and decoding reliability is improved.

At step 204, independent decoding is performed on the control information received by the beam corresponding to one TCI state indicated by the beam indication information.

In the embodiment, when one TCI state is indicated by the beam indication information, the independent decoding is performed on the control information received by the beam corresponding to the one TCI state indicated by the beam indication information.

In the beam indication method of the embodiment, the terminal receives the beam indication information of the CORESET group. The TCI states of the beams corresponding to respective CORESETs are indicated by the beam indication information, where the TCI state indicates the corresponding receiving beam when the terminal receives signaling transmitted by the PDCCH via each CORESET, so that the control information is received by using the receiving beam. The control information may be DCI signaling sent by the PDCCH on each CORESET in the CORESET group, which improves the success rate of receiving the control information. Meanwhile, for the number of the TCI states indicated by the beam indication information, the indication of the decoding mode is implemented, so that the decoding requirements under different scenarios are met.

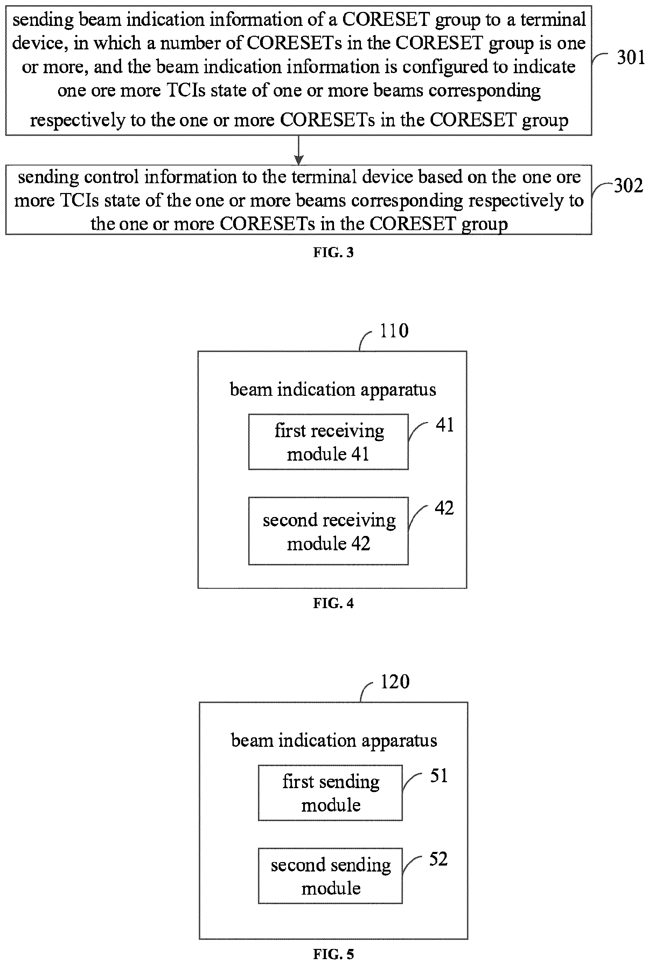

FIG. 3 is a flow diagram of a beam indication method provided in one embodiment of the present disclosure, the method is applied to a network device.

As illustrated in Fig. 3, the method may include the following steps.

At step 301, beam indication information of a CORESET group is sent to a terminal. A number of CORESETs in the CORESET group is one or more, and the beam indication information is configured to indicate one or more TCI states of one or more beams corresponding respectively to the one or more CORESETs in the CORESET group.

The beam indication method in the embodiment of the present disclosure may be applied to any network device. The network device is deployed in a wireless access network to provide a wireless access function for the terminal. The network device may be a base station (BS). The network device may wirelessly communicate with the terminal via one or more antennas. The network device may provide communication coverage for a geographic area where it is located. The base station may include different types, such as a macro base station, a micro base station, a relay station, or an access point, etc. In some embodiments, the base station may be referred to by those skilled in the art as base station transceiver, wireless base station, access point, wireless transceiver, basic service set (BSS), extended service set (ESS), NodeB, evolved NodeB (eNB or eNodeB), or some other suitable terms. Exemplarily, in a 5G system, the base station is referred to as gNB. For ease of description, in the embodiments of the present disclosure, the apparatus for providing the wireless communication function for the terminal is collectively referred to as the network device.

The terminal may be distributed throughout a mobile communication system, and each terminal may be stationary or mobile. The terminal may also be referred to by those skilled in the art as mobile station, subscriber station, mobile unit, user unit, wireless unit, remote unit, mobile device, terminal, wireless device, wireless communication device, remote device, mobile subscriber station, access user device, mobile user device, wireless user device, remote user device, handheld device, user agent, mobile client, client, vehicle-mounted device, wearable device, or some other suitable terms. The terminal may be a cellular phone, a personal digital assistant (PDA), a wireless modem, a wireless communication device, a handheld device, a tablet computer, a laptop computer, a cordless telephone, a wireless local loop (WLL) station, etc., and can communicate with the network device in the mobile communication system.

At step 302, control information is sent to the terminal based on the one or more TCI states of the one or more beams corresponding respectively to the one or more CORESETs in the CORESET group.

In the embodiment, the CORESET group is a CORESET group for PDCCH transmission of Multi-TRP. The number of the CORESETs included in the CORESET group may be one or more. The network device sends the beam indication information of the CORESET group to the terminal. The terminal receives the beam indication information of the CORESET group, and determines the corresponding receiving beam when receiving signaling transmitted by the PDCCH via each CORESET based on the TCI states of the beams corresponding to respective CORESETs indicated by the beam indication information, which achieves beam indication, and then the terminal receives the control information by using the receiving beam. The control information may be DCI signaling sent by the PDCCH via each CORESET in the CORESET group, which improves the success rate of receiving the control information.

In the embodiment of the present disclosure, the number of CORESETs included in the CORESET group may be one or more. When different numbers of CORESETs are included in the CORESET group, the numbers of TCI states corresponding to different CORESETs are also different. In the following, the implementation examples are used to explain the CORESET groups in different scenarios and the TCI states corresponding to the CORESETs.

### Embodiment 1:

In one implementation of the embodiments of the present disclosure, the CORESET group includes one first CORESET. A maximum number of first TCI states corresponding to the first CORESET is greater than or equal to two.

In the embodiment, the CORESET group includes one first CORESET, so that the beam indication information received by the terminal is the beam indication information of the first CORESET. The beam indication information indicates the first TCI state of the beam corresponding to the first CORESET. The maximum number of the first TCI states of the beam corresponding to the first CORESET is greater than or equal to two. That is, the receiving beam determined by the terminal may include one or more beams indicated by the one or more first TCI states of the one or more beams corresponding to the first CORESET. That is, the terminal receives the control information by using the one or more receiving beams indicated by the one or more first TCI states, so that determination of the receiving beam of the terminal is achieved, which improves success rate of receiving the control information.

As one implementation, each first TCI state corresponds to a different CORESET pool index, or each first TCI state corresponds to a different TRP. The CORESET pool index corresponds to one TRP, that is, different CORESET pool indexes correspond to different TRPs, which achieves that the first TCI states corresponding to one CORESET may correspond to different TRPs. That is, the terminal receives the control information sent from different TRPs based on different receiving beams determined based on the first TCI states corresponding to one CORESET.

It should be noted that terms "first CORESET" and "first TCI state" are used for the purpose of distinguishing them from CORESETs and TCIs in other embodiments, without defining the priority.

In the embodiment of the present disclosure, the beam indication information of the first CORESET may be a MAC CE or DCI. The following describes different implementations respectively.

As an implementation, the beam indication information is a first MAC CE.

The first MAC CE includes a first CORESET ID of the first CORESET and/or a CORESET group ID of the CORESET group, for example, the first CORESET ID is CORESET#1, or CORESET#2, or CORESET#3. For example, the CORESET group ID is CORESET group #1 or CORESET group #2, which is not limited in the embodiment. The first MAC CE further includes a first indication field and/or an associated second indication field, which will be specifically described below.

As one implementation, the first MAC CE only includes the first indication field. That is, the first indication field always presents in the first MAC CE, and it is not required to indicate whether the first indication field presents in the first MAC CE by the second indication field associated with the first indication field.

As a second implementation, the first MAC CE only includes the second indication field. In this case, the value of the second indication field is configured to indicate that the first indication field does not present in the first MAC CE. For example, the value of the second indication field is 0, indicating that the first indication field does not present in the first MAC CE.

As a third implementation, the first MAC CE includes the first indication field and the associated second indication field. Whether the first indication field presents in the first MAC CE or not is indicated by the second indication field.

In one implementation of the embodiment, the first indication field is configured to indicate a first TCI state, or the first indication field is configured to indicate a first TCI state and a CORESET pool index or a TRP corresponding to the first TCI state. The second indication field is configured to indicate whether the associated first indication field presents in the first MAC CE.

As shown in Table 1,
one example of the first MAC CE is shown in Table 1, and taking that the number of TCI states corresponding to the first CORESET is 2 as an example to explain. As shown in Table 1, the second indication field includes C₀, C₁, the first indication field includes TCI₀ and TCI₁. C₀ indicates whether the TCI₀ field presents in the first MAC CE. As one implementation, if the value of C₀ is 1, it indicates that the TCI₀ field presents, and if the value of C₀ is 0, it indicates that the TCI₀ field does not present. Similarly, C₁ indicates whether the TCI₁ field presents. If there is no C₀, that is to say, the second indication field is not required to indicate whether the TCI₀ field presents in the first MAC CE. That is, it is determined that the TCI₀ field surely presents in the first MAC CE. Similarly, if there is no C₁, that is to say, the second indication field is not required to indicate whether corresponding TCI1 field presents in the first MAC CE. That is, it is determined that the TCI₁ field surely presents in the first MAC CE.

In the embodiments, TCI0 may correspond to a TCI state of a first TRP, and TCI1 corresponds to a TCI state of a second TRP. Since the CORESET pool index and the TRP have a one-to-one correspondence, which achieves indicating the CORESET pool index or TRP corresponding to the first TCI state. That is, in a scenario with more than one TRP, more than one beam corresponding to the terminal may be configured to receive control information of the PDCCH sent by different TRPs to the terminal.

As a second implementation, the beam indication information is first DCI.

In one example of the embodiment, the first DCI includes one first code point, and the first TCI state corresponding to the first code point is indicated by a second MAC CE. The first DCI includes one bit, and corresponds to two first code points, respectively "0" or "1". Each first code point corresponds to one or two first TCI states. The one or two first TCI states corresponding to the first code point are determined based on one or two first TCI states corresponding to the first code point indicated by the second MAC CE.

As one implementation of the embodiments of the present disclosure, the second MAC CE includes the first CORESET ID and/or the CORSET group ID, and further includes one or more indication fields corresponding to the one or more first code points. For each first code point, an indication field corresponding to the first code point includes a third indication field and/or an associated fourth indication field, which will be described below in detail.

As one implementation, the second MAC CE only includes the third indication field, that is, the third indication field always presents in the second MAC CE. It is not required to indicate whether the third indication field presents in the second MAC CE by the fourth indication field associated with the third indication field.

As a second implementation, the second MAC CE only includes the fourth indication field. In this case, the value of the fourth indication field is configured to indicate that the third indication field does not present in the second MAC CE. For example, the value of the fourth indication field is 0, indicating that the third indication field does not present in the second MAC CE.

As a third implementation, the second MAC CE includes the third indication field and the associated fourth indication field. Whether the third indication field presents in the second MAC CE or not is indicated by the fourth indication field.

In one implementation of the embodiment, the third indication field is configured to indicate a first TCI state; or the third indication field is configured to indicate a first TCI state and a CORESET pool index or a TRP corresponding to the first TCI state. The fourth indication field is configured to indicate whether the associated third indication field presents in the second MAC CE.

The first DCI includes more than one bit, so that the first code point corresponding to the first DCI may be more than one. For example, the first DCI includes 3 bits, and may correspond to 8 code points, which are 000, 001, 010, 011, 100, 101, 110, and 111, respectively. In the embodiment, each code point has a corresponding indication field. In the embodiment, take each code point including two indication fields, i.e., the third indication field and the associated fourth indication field as an examples.

As shown in Table 2, an example of the second MAC CE is shown in Table 2. The MAC CE indicates a CORESET ID of one CORESET and/or a CORESET group ID. Take the DCI including 3 bits, which may indicate 8 code points as an example. The first first code point is 000, the corresponding fourth indication field includes (C0,0) field and (C0,1) field, and the third indication field includes (TCI_{0,0}) field and (TCI_{0,1}) field. Similarly, the second first code point is 001, the corresponding fourth indication field includes (C1,0) field and (C1,1) field, and the third indication field includes (TCI_{1,0}) field and (TCI_{1,1}) field. The principle is the same for other first code points, which will not be listed in the embodiment.

The (C_{0,0}) field in the fourth indication field indicates whether the (TCI_{0,0}) field in the third indication field presents in the second MAC CE. For example, if the value of the (C_{0,0}) field is 1, it indicates that the (TCI_{0,0}) field presents, so the value of the (TCI_{0,0}) field indicates a first TCI state. In the fourth indication field, the (C_{0,1}) field indicates whether the (TCI_{0,1}) field in the third indication field presents. For example, if the value of the (Co,i) field is 1, it indicates that the (TCI_{0,1}) field presents, so the value of the (TCI_{0,1}) field indicates a first TCI state. If the value of the (C_{0,1}) field is 0, it indicates that the (TCI_{0,1}) field does not present. If there is no (C_{0,0}) field, that is, the fourth indication field is not required to indicate whether the (TCI_{0,1}) field presents in the second MAC CE, that is, it is determined that the (TCI_{0,1}) field surely presents in the second MAC CE. If the (C_{0,1}) field does not present, that is to say, the fourth indication field is not required to indicate whether the corresponding (TCI_{0,1}) field presents in the second MAC CE. That is, it is determined that the (TCI_{0,1}) field surely presents in the second MAC CE.

In the embodiment, for example, the first code point is 000, and the fourth indication field corresponding to the first code point includes (C_{0,0}) and (C_{0,1}). The first code point is 111, the fourth indication field corresponding to the first code point includes (C_{7,0}) and (C_{7,1}), which will not be listed in the embodiment. When the first code point is 000, two corresponding first TCI states are indicated by the value of the (TCI_{0,0}) field and the value of the (TCI_{0,1}) field in the third indication field, respectively. When the first code point is 111, two corresponding first TCI states are indicated by the value of the (TCI_{7,0}) field and the value of the (TCI_{7,1}) field in the third indication field, respectively.

It should be noted that for each code point, the maximum number of the first TCI states corresponding to the code point is the maximum number of the first TCI states corresponding to the first CORESET.

### Embodiment 2:

In one implementation of the embodiment of the present disclosure, the CORESET group includes one or more second CORESETs.

A maximum number of second TCI states corresponding to each second CORESET is one, that is, each second CORESET may correspond to 0 or 1 second TCI state.

It should be noted that in the embodiment, in order to facilitate distinguishing, the CORESET included in the CORESET group is called the second CORESET, and the TCI state corresponding to the second CORESET is called the second TCI state.

In the embodiment, the CORESET group includes one or more second CORESETs. The maximum number of the second TCI states corresponding to the second CORESET is one. As one implementation, the beam indication information received by the terminal indicates the second TCI state of a beam corresponding to the second CORESET. When there is one second TCI state, the beam indicated by the second TCI state is used as the receiving beam for the terminal to receive the control information, which realizes indication of the receiving beam of the terminal and improves the success rate of receiving the control information. As another implementation, the beam indication information received by the terminal indicates the second TCI states of the beams corresponding to more than one second CORESET, so that the terminal determines one or more receiving beams used by the terminal to receive the control information based on the second TCI states corresponding to more than one second CORESET. The receiving beam corresponds to the second TCI state. That is, each second TCI state corresponds to one receiving beam, which realizes the indication of the receiving beam of the terminal and improves the success rate of receiving the control information.

In the embodiment of the present disclosure, the beam indication information of the second CORESET may be a MAC CE or DCI. The following describes different implementations respectively.

As an implementation, the beam indication information is a third MAC CE.

Since the CORESET group includes one or more second CORESETs, the third MAC CE includes a second CORESET ID of at least one second CORESET and/or the CORESET group ID. That is, the second CORESET included in the CORESET group has the corresponding second CORESET ID and/or CORESET group ID in the third MAC CE, which realizes indication of the corresponding second CORESET in the third MAC CE.

As one implementation, the third MAC CE also includes one or more fifth indication fields and/or sixth indication fields corresponding to the one or more second CORESETs, which will be described below in detail.

As one implementation, the third MAC CE only includes the first indication field. That is, the fifth indication field always presents in the third MAC CE, and it is not required to indicate whether the fifth indication field presents in the third MAC CE by the sixth indication field associated with the fifth indication field.

As a second implementation, the third MAC CE only includes the sixth indication field. In this case, the value of the second indication field is used to indicate that the fifth indication field does not present in the third MAC CE. For example, the value of the sixth indication field is 0, indicating that the fifth indication field does not present in the third MAC CE.

As a third implementation, the third MAC CE includes the fifth indication field and the associated sixth indication field. The sixth indication field indicates that the fifth indication field presents in the third MAC CE or does not present in the third MAC CE.

In one implementation of the embodiments, the fifth indication field is configured to indicate a second TCI state, or the fifth indication field is configured to indicate a second TCI state and a CORESET pool index or a TRP corresponding to the second TCI state. The sixth indication field is configured to indicate whether the associated fifth indication field presents in the third MAC CE.

As shown in Table 3 of the above embodiments, Table 3 shows an example of the third MAC CE. Take the CORESET group including two second CORESETs as an example for description. Table 3 shows the fifth indication field and the sixth indication field for the second CORESET ID including CORESET ID#0 and CORESET#1. The sixth indication field includes C₀' and Ci', and the fifth indication field includes TCI₀' and TCI₁'. The C₀' field is configured to indicate whether the TCI₀' field presents. For example, if the value of the C₀' field is 1, it indicates that the TCI₀' field presents. If the value of the C₀' field is 0, it indicates that the TCI₀' field does not present. Similarly, the C₁' field is configured to indicate whether the TCI₁ field presents. If there is no C₀', that is to say, the sixth indication field is not required to indicate whether the TCI₀' field presents in the third MAC CE. That is, it is determined that the TCI₀' field surely presents in the third MAC CE. If there is no Ci', that is to say, the sixth indication field is not required to indicate whether the corresponding TCI₁' field presents in the third MAC CE. That is, it is determined that the TCI₁' field surely presents in the third MAC CE.

The ID of the serving cell may include at least one of the serving cell ID, TRP ID, or CORESETPoolIndex. CORESET ID#0 and CORESET ID#1 may be replaced with the CORESET group ID, or replaced with CORESET ID#0, CORESET ID#1 and the CORESET group ID.

In one implementation of the embodiments of the present disclosure, the third MAC CE includes one second CORESET ID, such as CORESET ID#0. The third MAC CE is also applicable to another CORESET ID (such as CORESET ID#1) associated with the CORESET ID#0. The association relationship is given in other RRC signaling or MAC CE signaling. Similarly, CORESET ID#0 corresponds to a first TRP, and its TCI state is indicated by TCI₀'. CORESET ID#1 corresponds to a second TRP, and its TCI state is indicated by TCI₁'.

In another implementation of the embodiments of the present disclosure, the third MAC CE includes more than one second CORESET ID. For example, it includes two second CORESET IDs, namely CORESET ID#0 and CORESET ID#1. CORESET ID#0 corresponds to the first TRP, and its second TCI state is indicated by TCI₀'. CORESET ID#1 corresponds to the second TRP, and its second TCI state is indicated by TCI₁'.

It should be noted that for the case that the third MAC CE includes other numbers of second CORESET IDs, the principle is the same, and the embodiment will not be repeated.

As a second implementation, the beam indication information is second DCI.

In one example of the embodiments, the second DCI includes two second code points. The second TCI state corresponding to each second code point is indicated by a fourth MAC CE. The second DCI includes one bit, which corresponds to two second code points "0" and "1". Each second code point corresponds to one or two second TCI states. The second code point corresponds to one or two second TCI states, which are determined based on one or two second TCI states corresponding to the second code point indicated by the fourth MAC CE.

As one implementation of the embodiments, the fourth MAC CE includes a second CORESET ID of at least one second CORESET and/or the CORESET group ID, and also includes one or more indication fields corresponding to one or more second code points of each second CORESET. The indication field corresponding to each second code point includes a seventh indication field and an eighth indication field, which will be described below in detail.

As one implementation, the fourth MAC CE only includes the seventh indication field. That is, the seventh indication field always presents in the fourth MAC CE, and it is not required to indicate whether the seventh indication field presents in the fourth MAC CE by the eighth indication field associated with the seventh indication field.

As a second implementation, the fourth MAC CE only includes the sixth indication field. In this case, the value of the eighth indication field is configured to indicate that the seventh indication field does not present in the fourth MAC CE. For example, the value of the eighth indication field is 0, indicating that the seventh indication field does not present in the fourth MAC CE.

As a third implementation, the fourth MAC CE includes the seventh indication field and the associated eighth indication field. The eighth indication field indicates that the seventh indication field presents in the third MAC CE or does not present in the fourth MAC CE.

In one implementation of the present disclosure, the number of the seventh indication fields is one or more. Each seventh indication field is configured to indicate a second TCI state, or, each seventh indication field is configured to indicate a second TCI state, and a CORESET pool index or a TRP corresponding to the second TCI state. The eighth indication field is configured to indicate whether at least one corresponding seventh indication field presents in the fourth MAC CE. The number of the seventh indication fields is the same as the number of the second CORESETs in the CORESET group.

The second DCI includes more than one bit, so the second code point corresponding to the second DCI may be more than one. For example, the second DCI includes 3 bits, and may correspond to 8 code points, which are 000, 001, 010, 011, 100, 101, 110, and 111, respectively. In the embodiment, each second code point includes two indication fields, i.e., the seventh indication field and the eighth indication field.

As shown in Table 4, Table 4 shows an example of the fourth MAC CE. There are two seventh indication fields, and the seventh indication fields correspond to (TCI_{i, 0}') field and (TCI_{i 1}') field, respectively, which indicate the TCI states corresponding to the two CORESETs, respectively, i.e., the TCI states corresponding to CORESET ID#0 and CORESET ID#1. The value of i is 0-7. Take the DCI including 3bit which may indicate 8 code points as an example. The second code point is 000, and the corresponding eighth indication fields include (C_{0, 0}') field and (C_{0,} i') field, and the seventh indication fields correspond to (TCI₀, ₀') field and (TCI_{0, 1}') field, respectively. Similarly, the second code point is 111, the corresponding eighth indication fields include (C_{1,0}') field and (C_{1,1}') field, and the seventh indication fields include (TCI_{1,0}') field and (TCI_{1,1}') field, respectively. For other second code points, the principle is the same, which will be not listed in the embodiment.

The (C_{0,0}') field in the eighth indication fields indicates whether the (TCI_{0,0}') field in the seventh indication fields presents in the fourth MAC CE. For example, the value of the (C_{0,0}') field is 1, indicating that the (TCI_{0,0}') field presents, so that the value of the (TCI_{0,0}') field indicates the second TCI state corresponding to the CORESET ID#0. If the value of the (C_{0,0}') field is 0, the (TCI_{0,0}') field does not present, that is, not indicating the second TCI state corresponding to the CORESET ID#0. The (C_{0,1}') field in the eighth indication fields indicates whether the (TCI_{0,1}') field in the seventh indication fields presents. For example, the value of the (C_{0,1}') field is 1, indicating that the (TCI_{0,1}') presents, so that the value of the (TCI_{0,1}') field indicates the second TCI state corresponding to the CORESET ID#1. If there is no (C_{0,0}') field, that is, the eighth indication field for indicating whether the (TCI_{0,1}') field presents in the fourth MAC CE is not required, that is, it is determined that the (TCI_{0,1}') field surely presents in the fourth MAC CE. If the (C_{0,1}') field does not present, that is to say, the eighth indication field for indicating whether the corresponding (TCI_{0,1}') field presents in the fourth MAC CE is not required. That is, it is determined that the (TCI_{0,1}') field surely presents in the fourth MAC CE.

In the embodiment, for example, the second code point is 000, and the eighth indication fields corresponding to the second code point include (C_{0,0}') and (C_{0,1}'). The second code point is 111, the eighth indication fields corresponding to the second code point include (C_{7,0}') and (C_{7,1}'), which are not listed in the embodiment. When the second code point is 000, the corresponding second TCI states are indicated by the value of the (TCI_{0,0}') field and the value of the (TCI_{0,1}') field in the seventh indication fields, respectively. When the second code point is 111, the corresponding second TCI states are indicated by the value of the (TCI_{7,0}') field and the value of the (TCI_{7,1}') field in the seventh indication fields, respectively.

In the beam indication method of the embodiment of the present disclosure, the corresponding receiving beam when the terminal receives signaling transmitted by the PDCCH via each CORESET is determined based on the TCI states of the beams corresponding to respective CORESETs indicated by the beam indication information carried in different signaling, which achieves beam indication. Then the receiving beam is used to receive the control information. The control information may be DCI signaling sent by the PDCCH via each CORESET in the CORESET group, which improves the success rate of receiving the control information.

Corresponding to the beam indication method provided by the above embodiments, a beam indication apparatus is also provided in the present disclosure. Since the beam indication apparatus provided in the embodiment of the present disclosure corresponds to the method provided in the above embodiments, the implementations of the beam indication method are also applicable to the beam indication apparatus provided in the embodiment of the present disclosure, which will be no longer described in detail in the embodiments.

FIG. 4 is a block diagram of a beam indication apparatus 110 provided in one embodiment of the present disclosure. The apparatus is applied to a terminal.

As illustrated in FIG. 4, the beam indication apparatus 110 may include a first receiving module 41 and a second receiving module 42.

The first receiving module 41 is configured to receive beam indication information of a CORESET group. The number of CORESETs in the CORESET group is one or more, and the beam indication information is configured to indicate one or more TCI states of one or more beams corresponding respectively to the one or more CORESETs in the CORESET group.

The second receiving module 42 is configured to receive control information based on the beam indication information.

Optionally, the CORESET group includes one first CORESET.

A maximum number of first TCI states corresponding to the first CORESET is greater than or equal to two.

Each first TCI state corresponds to a different CORESET pool index, or each first TCI state corresponds to a different TRP.

Optionally, the beam indication information is a first MAC CE.

The first MAC CE includes a first CORESET ID of the first CORESET and/or a CORESET group ID of the CORESET group, and further includes a first indication field and/or an associated second indication field.

The first indication field is configured to indicate a first TCI state, or the first indication field is configured to indicate a first TCI state and a CORESET pool index or a TRP corresponding to the first TCI state.

The second indication field is configured to indicate whether the associated first indication field presents in the first MAC CE.

Optionally, the beam indication information is first DCI. The first DCI includes one first code point. A first TCI state corresponding to the first code point is indicated by a second MAC CE.

Optionally, the second MAC CE includes the first CORESET ID and/or the CORESET group ID, and further includes one or more indication fields corresponding to one or more first code points. An indication field corresponding to a first code point includes: a third indication field and/or an associated fourth indication field. The third indication field is configured to indicate a first TCI state, or the third indication field is configured to indicate a first TCI state and a CORESET pool index or a TRP corresponding to the first TCI state. The fourth indication field is configured to indicate whether the associated third indication field presents in the second MAC CE.

Optionally, the CORESET group includes one or more second CORESETs.

A maximum number of a second TCI state corresponding to a second CORESET is one.

Optionally, the beam indication information is a third MAC CE.

The first MAC CE includes a second CORESET ID of at least one second CORESET and/or a CORESET group ID of the CORESET group, and further includes one or more fifth indication fields and/or sixth indication fields corresponding respectively to the one or more second CORESETs.

The fifth indication field is configured to indicate a second TCI state, or the fifth indication field is configured to indicate a second TCI state and a CORESET pool index or a TRP corresponding to the second TCI state.

The sixth indication field is configured to indicate whether the associated fifth indication field presents in the third MAC CE.

Optionally, the beam indication information is second DCI.

The second DCI includes one second code point. A second TCI state corresponding to the second code point is indicated by a fourth MAC CE.

Optionally, the fourth MAC CE includes a second CORESET ID of at least one second CORESET and/or the CORESET group ID, and further includes one or more indication fields corresponding to one or more second code points of each second CORESET.

An indication field corresponding to a second code point includes a seventh indication field and an eighth indication field.

The number of seventh indication fields is one or more. Each seventh indication field is configured to indicate a second TCI state, or, each seventh indication field is configured to indicate a second TCI state, and a CORESET pool index or a TRP corresponding to the second TCI state.

The eighth indication field is configured to indicate whether at least one corresponding seventh indication field presents in the fourth MAC CE.

Optionally, the beam indication information is configured to indicate at least two TCI states. The apparatus further includes a first decoding module.

The first decoding module is configured to perform combined decoding on the control information received by beams corresponding to the at least two TCI states indicated by the beam indication information.

Optionally, the beam indication information is configured to indicate one TCI state. The apparatus further includes a second decoding module.

The second decoding module is configured to perform independent decoding on the control information received by a beam corresponding to the TCI state indicated by the beam indication information.

In the beam indication apparatus of the embodiment, the beam indication information of the CORESET group is received. The number of CORESETs in the CORESET group is one or more, and the beam indication information is configured to indicate one or more TCI states of one or more beams corresponding to the one or more CORESET in the CORESET group. The control information is received based on the beam indication information. In the present disclosure, the receiving beam used when the terminal receives signaling transmitted by the PDCCH via each CORESET is determined based on the TCI states of the beams corresponding to respective CORESETs indicated by the received beam indication information.

Corresponding to the beam indication method provided by the above embodiments, a beam indication apparatus is also provided in the present disclosure. Since the beam indication apparatus provided in the embodiment of the present disclosure corresponds to the beam indication method provided in the above embodiments, the implementations of the beam indication method are also applicable to the beam indication apparatus provided in the embodiment of the present disclosure, which will be no longer described in detail in the embodiments.

FIG. 5 is a block diagram of a beam indication apparatus 120 provided in one embodiment of the present disclosure. The apparatus is applied to a network device.

The beam indication apparatus 120 includes sending modules: a first sending module 51 and a second sending module 52.

The first sending module 51 is configured to send beam indication information of a CORESET group to a terminal. The number of CORESETs in the CORESET group is one or more, and the beam indication information is configured to indicate one or more TCI states of one or more beams corresponding respectively to the one or more CORESET in the CORESET group.

The second sending module 52 is configured to send control information to the terminal based on the one or more TCI states of the one or more beams corresponding respectively to the one or more CORESETs in the CORESET group.

Optionally, the CORESET group includes one first CORESET.

A maximum number of first TCI states corresponding to the first CORESET is greater than or equal to two.

Each first TCI state corresponds to a different CORESET pool index, or each first TCI state corresponds to a different TRP.

Optionally, the beam indication information is a first MAC CE.

The first MAC CE includes a first CORESET ID of the first CORESET and/or a CORESET group ID of the CORESET group, and further includes a first indication field and/or an associated second indication field.

The first indication field is configured to indicate a first TCI state, or the first indication field is configured to indicate a first TCI state and a CORESET pool index or a TRP corresponding to the first TCI state. The second indication field is configured to indicate whether the associated first indication field presents in the first MAC CE.

Optionally, the beam indication information is first DCI.

The first DCI includes one first code point. A first TCI state corresponding to the first code point is indicated by a second MAC CE.

Optionally, the second MAC CE includes the first CORESET ID and/or the CORESET group ID, and further includes one or more indication fields corresponding to one or more first code points.

An indication field corresponding to a first code point includes a third indication field and/or an associated fourth indication field.

The third indication field is configured to indicate a first TCI state, or the third indication field is configured to indicate a first TCI state and a CORESET pool index or a TRP corresponding to the first TCI state.

The fourth indication field is configured to indicate whether the associated third indication field presents in the second MAC CE.

Optionally, the CORESET group includes one or more second CORESETs.

A maximum number of a second TCI state corresponding to a second CORESET is one.

Optionally, the beam indication information is a third MAC CE.

The first MAC CE includes a second CORESET ID of at least one second CORESET and/or a CORESET group ID of the CORESET group, and further includes one or more fifth indication fields and/or one or more sixth indication fields corresponding to the one or more second CORESETs, respectively.

The fifth indication field is configured to indicate a second TCI state, or the fifth indication field is configured to indicate a second TCI state and a CORESET pool index or a TRP corresponding to the second TCI state.

The sixth indication field is configured to indicate whether the associated fifth indication field presents in the third MAC CE.

Optionally, the beam indication information is second DCI.

The second DCI includes one second code point. A second TCI state corresponding to the second code point is indicated by a fourth MAC CE.

Optionally, the fourth MAC CE includes a second CORESET ID of at least one second CORESET and/or the CORESET group ID, and further includes one or more indication fields corresponding to one or more second code points of each second CORESET.

An indication field corresponding to a second code point includes a seventh indication field and an eighth indication field.

The number of seventh indication fields is one or more. Each seventh indication field is configured to indicate a second TCI state, or, each seventh indication field is configured to indicate a second TCI state, and a CORESET pool index or a TRP corresponding to the second TCI state.

The eighth indication field is configured to indicate whether at least one corresponding seventh indication field presents in the second MAC CE.

In the beam indication apparatus of the embodiment, the network device sends the beam indication information of the CORESET group to the terminal. The terminal receives the beam indication information of the CORESET group, and determines the corresponding receiving beam when receiving signaling transmitted by the PDCCH via each CORESET based on one or more TCI states of one or more beams corresponding respectively to the one or more CORESET indicated by the beam indication information, which achieves beam indication. The terminal receives the control information by using the receiving beam. The control information may be DCI signaling sent by the PDCCH via each CORESET in the CORESET group, which improves the success rate of receiving the control information.

In order to implement the above embodiment, the present disclosure further proposes a communication device.

The communication device provided in the embodiment of the present disclosure includes a processor, a transceiver, a memory, and an executable program stored on the memory that can be execute by the processor. The aforementioned method is executed when the processor executes the executable program.

The communication device may be the aforementioned network device or terminal.

The processor may include various types of storage media, and the storage medium may be a non-transitory computer storage medium, and may continue to memorize the information stored thereon after the communication device is powered down. The communication device includes a base station or a terminal.

The processor may be connected to the memory via a bus or the like, and is configured to read the executable program stored on the memory, for example, as shown in at least one of FIG. 1 to FIG. 3.

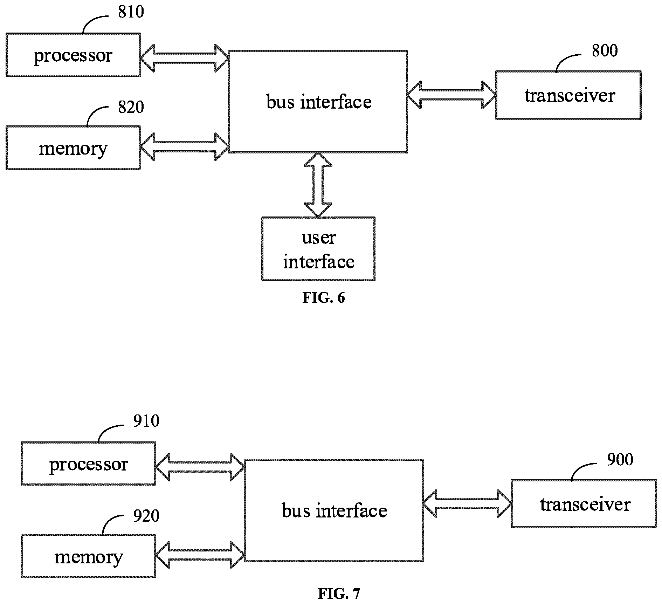

FIG. 6 is a block diagram of a terminal provided in one embodiment of the present disclosure. For example, the terminal may be a mobile phone, a computer, a digital broadcasting user equipment, a messaging device, a game console, a tablet device, a medical equipment, a fitness equipment, a personal digital assistant, etc.

As shown in FIG. 6, the terminal includes a transceiver 800, a processor 810, and a memory 820.

The memory 820 is configured to store a computer program. The transceiver 800 is configured to transmit and receive data under the control of the processor 810. The processor 810 is configured to read the computer program in the memory 820 and perform the following operations:
receiving beam indication information of a CORESET group; in which a number of CORESETs in the CORESET group is one or more, and the beam indication information is configured to indicate one or more transmission configuration indicator (TCI) states of one or more beams corresponding respectively to the one or more CORESETs in the CORESET group;
receiving control information based on the beam indication information. The transceiver 900 is configured to receive and send data under the control of the processor 910.

The transceiver 800 is configured to transmit and receive data under the control of the processor 810.

In FIG. 6, bus architecture may include any number of interconnected buses and bridges, specifically various circuits of one or more processors represented by the processor 810 and the memory represented by the memory 820 are linked together. The bus architecture may also link together various other circuits, such as a peripheral device, a voltage regulator, and a power management circuit, etc., which are well known in the art, and therefore are not further described herein. The bus interface provides an interface. The transceiver 800 may be more than one element, i.e., including a transmitter and a receiver, and providing units for communicating with other various devices on transmission media. The transmission media include a transmission medium such as a wireless channel, a wired channel, and an optical cable, etc. For different user devices, the user interface may also be an interface that may be externally or internally connected to a required device. The connected device includes, but is not limited to, a keypad, a display, a speaker, a microphone, a joystick, and the like.

The processor 810 is responsible for managing the bus architecture and general processing. The memory 820 may store data used by the processor 810 when performing operations.

Optionally, the processor 810 may be a central processing unit (CPU), an application specific integrated circuit (ASIC), a field-programmable gate array (FPGA), or a complex programmable logic device (CPLD), and the processor 810 may also adopt a multi-core architecture.

The processor 810 is configured to, by invoking the computer program stored in the memory, perform the method according to any one of FIG. 1 to FIG. 2 provided in the embodiments of the present disclosure based on obtained executable instructions. The processor 810 and the memory 820 may also be physically separately arranged.

It should be noted that, the above-mentioned terminal provided in the embodiments of the present disclosure can implement all method steps implemented in the method embodiments of FIG. 1 to FIG. 2, and can achieve the same technical effects, and the same parts and beneficial effects of the method embodiments in the embodiment are not described in detail herein.

As shown in FIG. 7, a block diagram of a network device is provided in one embodiment of the present disclosure. As shown in FIG. 7, the network device includes a transceiver 900, a processor 910, and a memory 920.

The memory 920 is configured to store a computer program. The transceiver 900 is configured to transmit and receive data under the control of the processor 910. The processor 910 is configured to read the computer program in the memory 920 and perform the following operations:
sending beam indication information of a CORESET group to a terminal; in which a number of CORESETs in the CORESET group is one or more, and the beam indication information is configured to indicate one or more transmission configuration indicator (TCI) states of one or more beams corresponding respectively to the one or more CORESETs in the CORESET group;
sending control information to the terminal based on the one or more TCI states of the one or more beams corresponding respectively to the one or more CORESETs in the CORESET group.

In FIG. 7, the bus architecture may include any number of interconnected buses and bridges, specifically various circuits of one or more processors represented by the processor 910 and the memory represented by the memory 920 are linked together. The bus architecture may also link together various other circuits, such as a peripheral device, a voltage regulator, and a power management circuit, etc., which are well known in the art, and therefore are not further described herein. The bus interface provides an interface. The transceiver 900 may be more than one element, i.e., including a transmitter and a receiver, and providing units for communicating with other various devices on transmission media. The transmission media include a transmission medium such as a wireless channel, a wired channel, and an optical cable, etc. The processor 910 is responsible for managing the bus architecture and general processing. The memory 920 may store data used by the processor 910 when performing operations.

The processor 910 may be a CPU, an ASIC, an FPGA, or a CPLD. The processor 910 may also adopt a multi-core architecture.

It should be noted that the above-mentioned network device provided in the embodiments of the present disclosure can implement all method steps implemented in the method embodiment in FIG. 3, and can achieve the same technical effect, and the same parts and beneficial effects of the method embodiments in the embodiment are not described in detail herein.

In order to implement the above embodiments, the present disclosure further proposes a computer storage medium.

The computer storage medium provided in the embodiments of the present disclosure stores an executable program. After the executable program is executed by the processor, the above methods, for example, as shown in at least one of FIG. 1 to FIG. 3 can be implemented.

In order to implement the above embodiment, the present disclosure further proposes a computer program product.

The computer program product provides in the embodiment of the present disclosure. After the executable program is executed by the processor, the above methods, for example, as shown in at least one of FIG. 1 to FIG. 3 can be implemented.

After considering specification and practicing the present disclosure herein, those skilled in the art will easily think of other implementations. The present disclosure is intended to cover any variations, usages, or adaptive changes of the present disclosure. These variations, usages, or adaptive changes follow the general principles of the present disclosure and include common knowledge or conventional technical means in the technical field not disclosed by the present disclosure. The description and the embodiments are to be regarded as exemplary only, and the true scope and spirit of the present disclosure are given by the appended claims.

It should be understood that the present disclosure is not limited to the precise structure described above and shown in the drawings, and various modifications and changes may be made without departing from its scope. The scope of the present application is only limited by the appended claims. The scope of the present application is only limited by the appended claims.

## Claims

1. A beam indication method, applied to a terminal, comprising:
receiving beam indication information of a control resource set (CORESET) group, wherein, a number of CORESETs in the CORESET group is one or more, and the beam indication information is configured to indicate one or more transmission configuration indicator (TCI) states of one or more beams corresponding respectively to the one or more CORESETs in the CORESET group; and
receiving control information based on the beam indication information.

2. The method of claim 1, wherein the CORESET group comprises one first CORESET;
wherein, a maximum number of first TCI states corresponding to the first CORESET is greater than or equal to two; and
each first TCI state corresponds to a different CORESET pool index, or each first TCI state corresponds to a different transmission and reception point (TRP).

3. The method of claim 2, wherein the beam indication information is a first media access control control element (MAC CE);
wherein, the first MAC CE comprises a first CORESET identification (ID) of the first CORESET and/or a CORESET group ID of the CORESET group, and further comprises a first indication field and/or an associated second indication field;
the first indication field is configured to indicate a first TCI state, or the first indication field is configured to indicate a first TCI state and a CORESET pool index or a TRP corresponding to the first TCI state; and
the second indication field is configured to indicate whether the associated first indication field presents in the first MAC CE.

4. The method of claim 2, wherein, the beam indication information is first downlink control information (DCI);
the first DCI comprises one first code point; wherein a first TCI state corresponding to the first code point is indicated by a second MAC CE.

5. The method of claim 4, wherein, the second MAC CE comprises a first CORESET ID of the first CORESET and/or a CORESET group ID of the CORESET group, and further comprises one or more indication fields corresponding to one or more first code points;
an indication field corresponding to a first code point comprises a third indication field and/or an associated fourth indication field;
wherein, the third indication field is configured to indicate a first TCI state; or the third indication field is configured to indicate a first TCI state and a CORESET pool index or a TRP corresponding to the first TCI state; and
the fourth indication field is configured to indicate whether the associated third indication field presents in the second MAC CE.

6. The method of claim 1, wherein the CORESET group comprises one or more second CORESETs; and a maximum number of a second TCI state corresponding to each second CORESET is one.

7. The method of claim 6, wherein the beam indication information is a third MAC CE;
wherein, the third MAC CE comprises a second CORESET ID of at least one second CORESET and/or a CORESET group ID of the CORESET group, and further comprises one or more fifth indication fields and/or one or more sixth indication fields corresponding to the one or more second CORESETs, respectively;
a fifth indication field is configured to indicate a second TCI state; or a fifth indication field is configured to indicate a second TCI state and a CORESET pool index or a TRP corresponding to the second TCI state;
a sixth indication field is configured to indicate whether the associated fifth indication field presents in the third MAC CE.

8. The method of claim 6, wherein, the beam indication information is second DCI;
the second DCI comprises one second code point; wherein a second TCI state corresponding to the second code point is indicated by a fourth MAC CE.

9. The method of claim 8, wherein, the fourth MAC CE comprises a second CORESET ID of at least one second CORESET and/or a CORESET group ID of the CORESET group, and further comprises one or more indication fields corresponding to one or more second code points of each second CORESET;
an indication field corresponding to a second code point comprises a seventh indication field and an eighth indication field;
wherein, a number of seventh indication fields is one or more, each seventh indication field is configured to indicate a second TCI state; or, each seventh indication field is configured to indicate a second TCI state, and a CORESET pool index or a TRP corresponding to the second TCI state; and
the eighth indication field is configured to indicate whether at least one corresponding seventh indication field presents in the fourth MAC CE.

10. The method of any of claims 1 to 9, wherein the beam indication information is configured to indicate at least two TCI states, the method further comprises:
performing combined decoding on control information received by beams corresponding to the at least two TCI states indicated by the beam indication information.

11. The method of any one of claims 1 to 9, wherein the beam indication information is configured to indicate one TCI state, the method further comprises:
performing independent decoding on control information received by a beam corresponding to the TCI state indicated by the beam indication information.

12. A beam indication method, applied to a network device, comprising:
sending beam indication information of a control resource set (CORESET) group to a terminal; wherein a number of CORESETs in the CORESET group is one or more, the beam indication information is configured to indicate one or more transmission configuration indicator (TCI) states of one or more beams corresponding respectively to the one or more CORESETs in the CORESET group; and
sending control information to the terminal based on the one or more TCI states of the one or more beams corresponding respectively to the one or more CORESETs in the CORESET group.

13. The method of claim 12, wherein the CORESET group comprises one first CORESET;
wherein, a maximum number of first TCI states corresponding to the first CORESET is greater than or equal to two;
each first TCI state corresponds to a different CORESET pool index, or each first TCI state corresponds to a different transmission and reception point (TRP).

14. The method of claim 13, wherein the beam indication information is a first media access control control element (MAC CE);
wherein, the first MAC CE comprises a first CORESET identification (ID) of the first CORESET and/or a CORESET group ID of the CORESET group, and further comprises a first indication field and/or an associated second indication field;
the first indication field is configured to indicate a first TCI state; or the first indication field is configured to indicate a first TCI state and a CORESET pool index or a TRP corresponding to the first TCI state; and
the second indication field is configured to indicate whether the associated first indication field presents in the first MAC CE.

15. The method of claim 13, wherein, the beam indication information is first downlink control information (DCI);
the first DCI comprises one first code point; wherein a first TCI state corresponding to the first code point is indicated by a second MAC CE.

16. The method of claim 15, wherein the second MAC CE comprises a first CORESET ID of the first CORESET and/or a CORESET group ID of the CORESET group, and further comprises one or more indication fields corresponding to one or more first code points;
an indication field corresponding to a first code point comprises a third indication field and/or an associated fourth indication field;
wherein, the third indication field is configured to indicate a first TCI state, or the third indication field is configured to indicate a first TCI state and a CORESET pool index or a TRP corresponding to the first TCI state; and the fourth indication field is configured to indicate whether the associated third indication field presents in the second MAC CE.

17. The method of claim 12, wherein the CORESET group comprises one or more second CORESETs; and a maximum number of a second TCI state corresponding to each second CORESET is one.

18. The method of claim 17, wherein the beam indication information is a third MAC CE;
wherein the third MAC CE comprises a second CORESET ID of at least one second CORESET and/or a CORESET group ID of the CORESET group, and further comprises one or more fifth indication fields and/or one or more sixth indication fields corresponding to the one or more second CORESETs, respectively;
a fifth indication field is configured to indicate a second TCI state, or a fifth indication field is configured to indicate a second TCI state and a CORESET pool index or a TRP corresponding to the second TCI state; and
a sixth indication field is configured to indicate whether the associated fifth indication field presents in the third MAC CE.

19. The method of claim 17, wherein the beam indication information is second DCI;
the second DCI comprises one second code point; wherein a second TCI state corresponding to the second code point is indicated by a fourth MAC CE.

20. The method of claim 19, wherein the fourth MAC CE comprises a second CORESET ID of at least one second CORESET and/or a CORESET group ID of the CORESET group, and further comprises one or more indication fields corresponding to one or more second code points of each second CORESET;
an indication field corresponding to a second code point comprises a seventh indication field and an eighth indication field;
wherein, a number of seventh indication fields is one or more; each seventh indication field is configured to indicate a second TCI state; or, each seventh indication field is configured to indicate a second TCI state, and a CORESET pool index or a TRP corresponding to the second TCI state; and the eighth indication field is configured to indicate whether at least one corresponding seventh indication field presents in the second MAC CE.

21. A beam indication apparatus, applied to a terminal, comprising:
a first receiving module, configured to receive beam indication information of a control resource set (CORESET) group; wherein a number of CORESETs in the CORESET group is one or more, and the beam indication information is configured to indicate one or more transmission configuration indicator (TCI) states of one or more beams corresponding respectively to the one or more CORESETs in the CORESET group; and
a second receiving module, configured to receive control information based on the beam indication information.

22. A beam indication apparatus, applied to a network device, comprising:
a first sending module, configured to send beam indication information of a control resource set (CORESET) group to a terminal; wherein a number of CORESETs in the CORESET group is one or more, and the beam indication information is configured to indicate one or more transmission configuration indicator (TCI) states of one or more beams corresponding respectively to the one or more CORESETs in the CORESET group; and
a second sending module, configured to send control information to the terminal based on the one or more TCI states of the one or more beams corresponding respectively to the one or more CORESETs in the CORESET group.

23. A communication device, comprising: a transceiver; a memory; and a processor, wherein the processor respectively connects to the transceiver and the memory, and is configured to control the transceiver to receive or send wireless signals by executing computer-executable instructions on the memory, and to implement the method according to any one of claims 1 to 11 or claims 12 to 20.

24. A computer storage medium, wherein the computer storage medium stores computer-executable instructions, the computer-executable instructions are executed by a processor to implement the method according to any one of claims 1 to 11 or claims 12 to 20.
